# EUROPÄISCHE PATENTANMELDUNG

(11) **EP 1 308 080 A2**
(43) Veröffentlichungstag der Anmeldung: **07.05.2003**
(21) Anmeldenummer: 02021076.1
(22) Anmeldetag: 21.09.2002
(51) Int. Cl.: A01F 15/14, B65B 13/22

(54) **Bindevorrichtung für eine Rundballenpresse**

(30) Priorität: 30.10.2001 DE 10153517
(71) Anmelder: DEERE & COMPANY, Moline, Illinois 61265-8098 (US)
(72) Erfinder: Viaud, Jean, 70100 Gray (FR); Uros, Raymond, 70100 Gray (FR); Repellin, Jérôme, 38880 Autrans (FR)
(74) Vertreter: Magin, Ludwig Bernhard

(57) **Zusammenfassung**

Es wird eine Bindevorrichtung (14) und ein Verfahren zur Steuerung einer Bindevorrichtung (14) beschrieben, wobei eine Bindemittelführung (36), eine Schneidvorrichtung (40) und eine erste Bremse (42) für Bindemittel enthalten ist, die Bremse steuerbar ist und eine variable Bremskraft erzeugt.

Zur Verbesserung des Bindevorgangs von Erntegut werden Bremsen (42) für Bindemittel (46) eingesetzt, mit denen eine Bindespannung erzeugt bzw. erhöht wird, indem das Bindemittel (46) beim Bindevorgang entgegen des Bindemittelstromes zurückgehalten wird.

Dabei ist es zweckmäßig, zu Beginn des Bindeprozesses nur eine niedrige Bindespannung aufzubringen, die Spannung während des fortlaufenden Bindeprozesses auf einen möglichst hohen Wert zu steigern und am Ende des Bindevorgangs die Spannung stromaufwärts der Schneidvorrichtung (40) wieder zu reduzieren.

Erfindungsgemäß wird eine Bindevorrichtung (14) vorgeschlagen, die mittels einer Steuergestängeeinheit (64) in Abhängigkeit von Bindezykluszuständen eine erste Bremse (42) für Bindemittel ansteuert und wenigstens zwei Bremskraftwechsel innerhalb eines Bindezyklus auslöst.

## Beschreibung

Die Erfindung betrifft eine Bindevorrichtung und ein Verfahren zur Steuerung einer Bindevorrichtung mit einer Zuführung, wenigstens einem Trennmittel und wenigstens einer Bremse für Bindemittel, wobei die Bremse steuerbar ist und eine variable Bremskraft erzeugt.

Bei Erntearbeiten werden heutzutage verschiedene Bindemittel wie Garne, Netze oder Plastikfolien eingesetzt, mit denen das in Ballen geformte Erntegut umhüllt bzw. gebunden wird, um deren Handhabung zu vereinfachen.

Dabei sollte die Spannung dieser Bindemittel hoch genug sein, um einen korrekten Bindevorgang zu gewährleisten. Diese Spannung wird durch Brems- oder Vorzugsvorrichtungen aufgebracht, indem das Bindemittel beim Bindevorgang entgegen des Bindemittelstromes zurückgehalten wird.

Die DE 195 17 385 offenbart eine Rundballenpresse für landwirtschaftliches Erntegut in der eine Bindevorrichtung mit einem Vorzugsrollenantrieb für Bindemittel wie z.B. Garne, Netze oder Folien eingesetzt werden, wobei die Bindevorrichtung mit einer über den Vorzugsrollenantrieb geschalteten Bremseinrichtung versehen ist, um eine Spannung des Bindemittels beim Bindevorgang des Ballens hervorzurufen. Die hier vorgeschlagene Bremseinrichtung ist über ein Gestänge mit dem Vorzugsrollenantrieb verbunden und wird, sobald der Vorzug ausgeschaltet wird, zugeschaltet, wobei die erzeugte Bindespannung bis zum Ende des Bindevorgangs aufrechterhalten bleibt.

Rundballenpressen ohne Vorzugsvorrichtungen haben den Vorteil, dass sie konstruktiv weniger aufwändig sind und wesentlich störunanfälliger arbeiten. Bei hohen Bindespannungen kommt es hierbei jedoch gelegentlich zu Problemen beim Starten des Bindevorgangs, wenn die Haltekraft für das Bindemittel, welche durch die Drehbewegung des Ballens und die dadurch entstehenden Reibkräfte am Bindemittel hervorgerufen wird, nicht groß genug ist. Das führt dazu, dass das Bindemittel durchrutscht und eine Mitnahme des Bindemittels nach der erfolgten Erfassung ausbleibt.

Dennoch sind möglichst hohe Bindespannungen notwendig, um gute Ergebnisse beim Bindevorgang zu erreichen.

Eine konstruktive Lösung einer Garnbremse, die während des Bindevorgangs eine variable Spannung ermöglicht, ist in DE 24 48 645 offenbart. Hier wird mittels einer Handkurbel die Position eines Garnzuführarms gesteuert, der an einer Schwenkscheibe gekoppelt, die Bindemittelführung in den Ballenpressraum einleitet. In Abhängigkeit der Schwenkscheibenstellung wird hier zu Beginn des Bindevorgangs, jedoch erst nach der Erfassung des Garns durch den Ballen ein Federmechanismus ausgelöst. Der Federmechanismus setzt das Garn unter Spannung, bis die Endposition des Garnzuführarms, nach Durchtrennen des Garns durch ein Messer, erreicht wird. Vor Beginn des nächsten Zyklus wird der Garnzuführarm bzw. die Schwenkscheibe wieder in die Ausgangsstellung gebracht und der Federmechanismus blockiert. Dadurch kann das Garn während des Einfangvorgangs quasi spannungsfrei erfasst werden.

Neben diesen und anderen Vorteilen weisen die aus dem Stand der Technik bekannten Bindevorrichtungen bzw. -verfahren aber auch Nachteile auf.

Die in DE 195 17 385 genannte Rundballenpresse weist eine durch einen Vorzugsrollenantrieb spannungsangepasste Garn- oder Folienführung auf. Nachteilig wirkt sich jedoch aus, dass ein Vorzugsrollenantrieb höhere Herstellungskosten erfordert, da ein erhöhter konstruktiver und technischer Aufwand betrieben werden muss, wodurch sich wiederum die Störanfälligkeit der gesamten Vorrichtung erhöht.

Die in DE 24 48 645 vorgeschlagene Bindevorrichtung sieht eine manuelle Steuerung der Bindemittelführung vor, in Abhängigkeit von dieser eine Bremse aktiviert wird, die nach Erfassen des Garns durch den Ballen die Bindespannung erhöht und diese bis zur Endposition der Bindemittelführung nach Durchtrennen des Garns beibehält. Bei zu hoher Spannung des Garns kommt es am Ende des Bindeprozesses, wenn das Garn durchtrennt wird, zu einer überhöhten elastischen Entspannung des Garns. Dies führt dazu, dass das Garn zurückschnurrt und sich um Teile oder Elemente der Bindevorrichtung windet. Dadurch kann der Einfangprozess des Garns für den darauf folgenden Bindezyklus nicht mehr eingeleitet werden, wodurch eine Unterbrechung der Prozessfolge eintritt.

Die der Erfindung zugrunde liegende Aufgabe wird darin gesehen, zu Beginn des Bindeprozesses nur eine niedrige Bindespannung aufzubringen um den Einfangvorgang zu vereinfachen, die Spannung während des fortlaufenden Bindeprozesses auf einen möglichst hohen Wert zu steigern um möglichst hohe Kompressionsraten mit dem Bindevorgang zu erzielen und am Ende des Bindevorgangs die Spannung wieder zu reduzieren, so dass die eingangs genannten Probleme überwunden werden. Insbesondere soll zum einen auf konstruktiv aufwändige Vorzugsvorrichtungen verzichtet werden und zum anderen eine Bediener unabhängige Zuführung für das Bindemittel Verwendung finden.

Die Aufgabe wird erfindungsgemäß durch die Lehre des Patentanspruchs 1 bzw. 13 gelöst. Weitere vorteilhafte Ausgestaltungen und Weiterbildungen der Erfindung gehen aus den Unteransprüchen hervor.

Erfindungsgemäß wird eine Bindevorrichtung vorgeschlagen, die mittels eines mit der Bindevorrichtung gekoppelten Zuführarms, der eine Steuergestängeeinheit enthält in Abhängigkeit von Bindezykluszuständen eine erste Bremse für Bindemittel ansteuert und wenigstens zwei Bremskraftwechsel innerhalb eines Bindezyklus auslöst. Das Verfahren zur Steuerung dieser Bremse sieht vor, dass, abgesehen von einer nach Beginn des Bindezyklus erfolgten Bremskrafterhöhung, ein weiterer Bremskraftwechsel vor der Bindematerialtrennung erfolgt und dabei die Bremskraft reduziert bzw. minimiert wird. Zusätzlich können weitere z. B. in Intervallen aufeinander folgende Bremskraftwechsel zwischen den oben genannten Bremskraftwechseln erfolgen in denen die Bremskräfte nach Bedarf erhöht oder reduziert werden.

Der Bindezyklusbeginn kennzeichnet einen Bindezykluszustand, bei dem das Bindemittel durch das Erntegut mitgenommen wird. Es folgt ein zweiter kennzeichnender Bindezykluszustand, bei dem unter erhöhter Spannung das Erntegut entlang seiner Mantelfläche gebunden wird, bevor ein weiterer Bindezykluszustand eintritt, mit dem das Ende eines Bindezyklus eingeleitet wird. Dabei wird das Bindemittel von einer Trennvorrichtung getrennt, nachdem dieses auf dem Erntegut festgezurrt, verknotet, verklebt oder anderweitig befestigt worden ist.

In einer vorzugsweisen Ausführung der Steuerung sind auch in Abhängigkeit anderer Bindezykluszustände weitere Bremskraftwechsel realisierbar, so kann beispielsweise vor Ende des Bindezyklus eine zusätzliche Erhöhung der Bindespannung eingeleitet werden. Dadurch wird ein besonders gesichertes Festzurren des Bindemittels gewährleistet, bevor die Spannung aus dem Bindemittel kurz vor dem Trennvorgang, durch den letzten Bremskraftwechsel innerhalb des Bindezyklus, herausgenommen wird.

In einer erweiterten Ausführung kann durch Einsatz einer zweiten Bremse, die hinter der Trennvorrichtung positioniert ist, die zum Festzurren des Bindemittels erforderliche Spannung aufgebracht und somit die steuerbare Bremse entlastet werden, so dass der Trennvorgang wie eingangs beschrieben "spannungsarm" durchgeführt wird. Eine mögliche Ausführung dieser Bremse in Form einer Feder sowie Vorschläge zu alternativen Lösungen wird in der deutschen Patentanmeldung Nr. 101 25 569.1 vom 25.05.01 für den Einsatz in einer Rundballenpresse beschrieben.

Die Erfindung sieht vor, die Steuerung der Bindemittelbremse automatisch in Abhängigkeit von der Bindemittelführung und damit in Abhängigkeit von dem Bindezykluszustand durchzuführen. Dazu werden Steuermittel eingesetzt, die sowohl mit der Bindemittelführung als auch mit einer Bindemittelbremse gekoppelt sind und eine steuerbare Bremskraft bzw. eine auf die Bremse einwirkende Steuerkraft erzeugen, wobei diese Eigenschaften auf mechanischem und/oder elektrischem und/oder magnetischem und/oder hydraulischem und/oder pneumatischem Wege realisierbar sind.

Die hier offenbarte Bindevorrichtung sieht die Verwendung von bandförmigen Bindemitteln wie beispielsweise Garne, Drähte oder Blechbänder vor. Das Verfahren zur Steuerung einer Bindevorrichtung ist des Weiteren auch für die Anwendung auf flächenabdeckende Bindemittel wie beispielsweise Netze oder Folien vorgesehen. Für die Verwendung von bandförmigen Bindemitteln gilt dabei, dass die Bindemittelführung mehr als ein Bindemittel während eines Bindezyklus, vorzugsweise unter Verwendung von mehr als ein parallel arbeitenden Zuführarm, zuführen kann. Dadurch wird beispielsweise der Bindeprozess verstärkt oder durch entsprechende Anordnung der Zuführarme verkürzt. Bei der Zuführung von mehr als einem Bindemittel ist der Einsatz von mindestens einer Bindemittelbremse pro Bindemittel vorgesehen oder der Einsatz mindestens einer Bindemittelbremse, die übergreifend mehrere Bindemittel abbremst.

Auf mechanischem Wege wird beispielsweise ein Mechanismus ausgelöst, der zwei gegenüber angeordnete, miteinander beweglich verbundene und durch Vorspannmittel, wie z. B. Druckfedern, vorgespannte Bremskörper in ihrem Anpressdruck zueinander steuert und die durch die Druckkraft der Druckfedern hervorgerufene Bremskraft verringert oder erhöht, d. h. reguliert. Dabei sind die Bremskörper als plattenförmige Bleche ausgebildet, wovon der erste Bremskörper fest mit einem Trägerrahmen verankert ist und der zweite mit dem ersten Bremskörper durch Führungsbolzen gekoppelt ist.

Zwischen den Bremskörpern wird das Bindemittel hindurchgeführt und durch den Anpressdruck der beiden Bremskörper abgebremst, wodurch eine Bindespannung hervorgerufen wird.

Die Änderung der Vorspannkraft der als Druckfedern ausgebildeten Vorspannmittel wird durch Steuerelemente ausgelöst, die mit einem Zuführarm für Bindemittel verbunden sind und in Abhängigkeit der Position des Zuführarms über einen Steuerbogen gefahren werden. Der Steuerbogen ist fest mit dem zweiten Bremskörper verbunden und ruft, entsprechend seiner bogenförmigen Kontur eine Abstandsänderung zwischen den beiden Bremskörpern hervor. Durch die Abstandsänderung wird wiederum der Anpressdruck der Bremskörper zueinander und damit die Bremskraft gesteuert. Durch unterschiedliche Ausführungen der Kontur des Steuerbogens können verschiedene, in Betrag und Richtung variierbare Bremskraftwechsel beim Überfahren des Steuerbogens durch die Steuermittel erzielt werden.

Die Ausführung der Bremse kann in einer variierten Form unter Einsatz von Elektromagneten erfolgen, die elektronisch gesteuert, einen oder mehrere Bremskörper an das Bindemittel pressen und das Bindemittel durch Hervorrufen einer Reibkraft abbremsen. In diesem Fall kann die Bremskraft über eine Stromoder Spannungsregelung in Abhängigkeit der Bindemittelführung erfolgen.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine erfindungsgemäße, perspektivische Darstellung einer Bindevorrichtung einer Rundballenpresse,
- Fig. 2: eine Darstellung einer mit einer Bindemittelführung gekoppelten, mechanisch steuerbaren Bremse,
- Fig. 3: eine Detailansicht der Bremse,
- Fig. 4: eine perspektivische Darstellung der Bindevorrichtung am Ende des Bindevorgangs,
- Fig. 5: eine schematische Darstellung der Bindevorrichtung in Verbindung mit einer elektronisch bzw. elektromagnetisch gesteuerten Bremse sowie
- Fig. 6: eine schematische Detailansicht der elektronisch bzw. elektromagnetisch gesteuerten Bremse aus Fig. 5.

Zunächst sei darauf hingewiesen, dass sich die im Folgenden benutzten Bezeichnungen "rechts" und "links" entsprechend einer Sichtweise in Vorwärtsfahrt einer Rundballenpresse 10 getroffen sind.

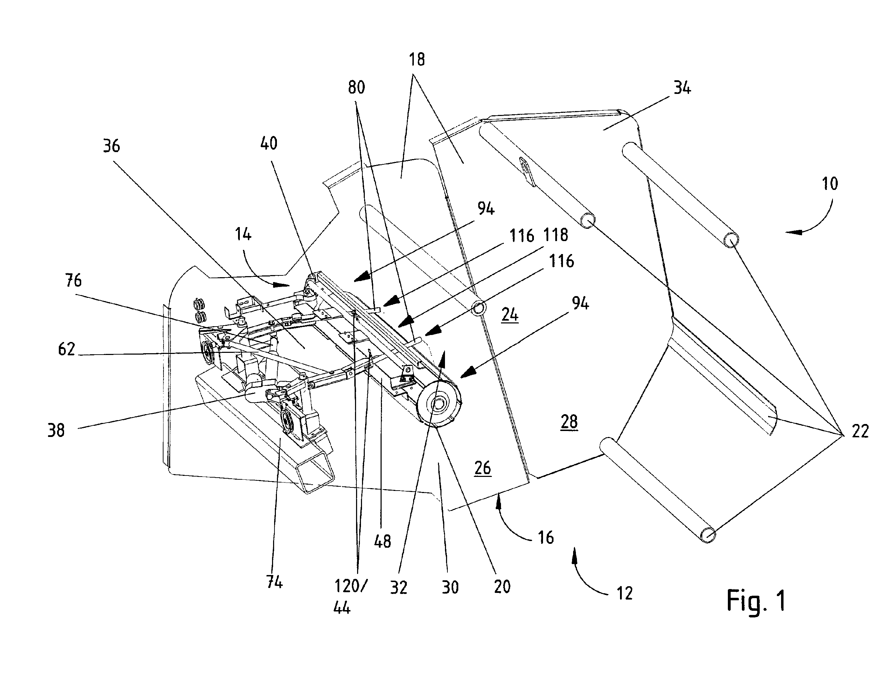

Fig. 1 deutet eine Rundballenpresse 10 an, von der ein Fahrgestell 12 und eine Bindevorrichtung 14 zu erkennen ist.

Bei der Rundballenpresse 10 kann es sich um jede bekannte Art einer Rundballenpresse 10 handeln, also um eine Festkörperpresse oder um eine Presse mit variablem Pressraum, die zum Pressen von Erntegütern wie z. B. Gras oder Baumwolle oder sonstigen Pressgütern, wie z. B. Müll eingesetzt werden kann. Derartige Rundballenpressen 10 werden z. B. von JOHN DEERE unter der Bezeichnung "Ballenpresse 575" angeboten und bedürfen daher keiner eingehenden Erläuterung. Es sei lediglich angemerkt, dass eine solche Rundballenpresse 10 auf Rädern abgestützt über den Boden bewegt wird und dabei während des Betriebes über eine nicht gezeigte Aufnahmevorrichtung Erntegut aufnimmt, das zu einem Rundballen geformt und mittels der Bindevorrichtung 14 gebunden wird.

Das Fahrgestell 12 enthält unter anderem einen Rahmen 16 mit Seitenwänden 18, der mit einer nicht gezeigten Deichsel sowie mit einem Fahrwerk verbunden ist. Zwischen den Seitenwänden 18 sind Presselemente 20 und Querstreben 22 angeordnet. Die Presselemente bilden zusammen mit den Seitenwänden 18 einen Pressraum 24.

Der Rahmen 16 ist in bekannter Weise als ein Schweißzusammenbau ausgebildet, der zusammen mit den Querstreben 22 die Deichsel, das Fahrwerk, die Aufnahmevorrichtung, die Seitenwände 18, die Presselemente 20 sowie die Bindevorrichtung 14 zusammenhält bzw. trägt.

Die Seitenwände 18 begrenzen seitig den Pressraum 24 und sind annähernd vertikal geteilt in vordere Hälften 26 und rückwärtige Hälften 28.

Das Fahrwerk enthält, jeweils nicht gesondert bezeichnet, eine Achse und Räder, mit denen sich das Fahrgestell 12 auf dem Boden abstützt. Das Fahrwerk ist fest mit dem Fahrgestell 12 verbunden.

Die Presselemente 20 sind als Rollen ausgebildet, die als umfangsmäßige Begrenzung des Pressraums 24 dienen. Die Presselemente 20 belassen zwischen sich einen Pressguteinlass 30 für das Pressgut in Form eines ersten Spalts, und einen Bindemitteleinlass 32 zum Pressraum 24, der durch einen zweiten Spalt gebildet wird. Die bei dem hier dargestellten Ausführungsbeispiel als Rollen ausgebildete Presselemente 20 können für den gleichen Zweck auch als Riemen oder Bänder sowie als Stabkettenförderer oder sonstiges Zugmittel ausgebildet sein.

Der Pressraum 24 ist von nicht veränderbarer Größe und nimmt das Pressgut auf, das zu einem Ballen aufgerollt wird, wobei das Pressgut durch den Pressguteinlass 30 aufgenommen wird.

Dem Pressguteinlass 30 ist eine an sich bekannte Aufnahmevorrichtung vorgelagert, die das Pressgut vom Boden aufnimmt und durch den Pressguteinlass 30 dem Pressraum 24 zuführt.

Die vorderen und rückwärtigen Hälften 26, 28 sind mit Querstreben 22 verwindungssteif verbunden, wobei die rückwärtigen Seitenwandhälften 28 einen vertikal schwenkbaren Gehäuseteil 34 bilden. Durch Anheben des Gehäuseteils 34 mittels eines nicht dargestellten Schwenkmechanismus kann der gepresste Ballen aus dem Pressraum 24 ausgeworfen werden.

Die Bindevorrichtung 14 enthält unter anderem eine Bindemittelführung 36, einen Stellmotor 38, einen nicht dargestellten Garnvorratsbehälter, eine Schneidvorrichtung 40, eine erste Bremse 42 und eine zweite Bremse 44.

Die Bindevorrichtung 14 dient dazu, das in Form eines Ballens gepresste Erntegut nach dem Pressvorgang mit Bindemittel 46 zu umschlingen. Dazu wird das Bindemittel 46 durch die Bindemittelführung 36 an den Bindemitteleinlass 32 des Pressraums 24 geführt und dort von dem sich drehenden Ballen mitgenommen. Der Stellmotor 38 bewegt dabei die Bindemittelführung 36, über die das Bindemittel 46 entlang der Ballenachse geführt wird, und der drehende Ballen entlang seiner Mantelfläche umwickelt wird. Nach dem Bindevorgang wird das Bindemittel 46 durch die Schneidvorrichtung 40 von dem Ballen getrennt und der Ballen aus dem Pressraum 24 ausgeworfen.

Die Schneidvorrichtung 40 enthält eine feststehende Ambossschiene 48, die zwischen den Seitenwänden 18 angebracht ist, eine klappbare Schneideschiene 50, auf der Messer 52 zum Trennen des Bindemittels 46 angeordnet sind, sowie einen Betätigungsmechanismus 54, der über ein Federblech 56 durch ein erstes Steuermittel 58 eines gemäß Fig. 1 oberen Zuführarms 60 betätigt wird. Die Schneidvorrichtung 40 ist derart zwischen der ersten und der zweiten Bremse 42, 44 ausgerichtet, dass zum Ende des Bindevorgangs das Bindemittel 46 in die Schneidvorrichtung 40 geführt wird. Dabei betätigt das erste Steuermittel 58 des gemäß Fig. 1 oberen Zuführarms 60 zum Ende des Bindevorgangs das Federblech 56, wodurch der Betätigungsmechanismus 54 ausgelöst wird und in bekannter Art und Weise die Messer 52 durch Herunterklappen der Schneideschiene 50 auf die Ambossschiene 48 stoßen und das Bindemittel 46 vom Ballen trennen.

Bei dieser speziellen Bindemittelführung 36 sind zwei durch eine Koppelstange 62 miteinander gekoppelte Zuführarme 60 vorgesehen, die jeweils ein Bindemittel 46 in Form von Bindegarn dem Bindemitteleinlass 32 zuführen und jeweils mit einer Steuergestängeeinheit 64 zur Steuerung der jeweils ersten Bremse 42 und mit einer Führungsgestängeeinheit 66 zur Führung des Bindemittels 46 ausgestattet sind. Des Weiteren sind Bindegarnrollen 68 vorgesehen, über die das Bindemittel 46 von nicht gezeigten Bindegarnvorratsrollen zu den Zuführarmen 60 geführt wird.

Die Zuführarme 60 sind jeweils mittels vertikal angeordneten Lagerbuchsen 70 um vertikal angeordnete Lagerzapfen 72 entlang der Ballenachse schwenkbar, gelagert. Die Lagerzapfen 72 werden von einer Trägerkonstruktion 74 gehalten, die zwischen den beiden vorderen Hälften 26 angebracht ist. Von der Lagerbuchse 70 aus erstrecken sich in entgegengesetzter Richtung die Steuergestängeeinheit 64 sowie die Führungsgestängeeinheit 66, die beide fest mit der Lagerbuchse 70 der Zuführarme 60 verbunden sind.

Der Stellmotor 38 ist ein Elektromotor, der über eine manuelle oder elektronische Steuereinheit gesteuert wird. Die Steuerung erfolgt durch Sensoren oder manuell. Der Stellmotor 38 dient dazu, die Bindemittelführung 36 in ihrer Schwenkbewegung anzutreiben und die verschiedenen Stellungen der Bindemittelführung 36 zu koordinieren. Der Stellmotor 38 ist an die Trägerkonstruktion 74 angeflanscht und bewegt die Bindemittelführung 36 entlang der Ballenachse mittels einer Stellspindel 76, die fest mit der Führungsgestängeeinheit 66 des gemäß Fig. 1 rechten Zuführarms 60 verbunden ist. Dabei wird der gemäß Fig. 1 linke Zuführarm 60 über die Koppelstange 62, die die Steuergestängeeinheit 64 des gemäß Fig. 1 rechten Zuführarms 60 mit der Führungsgestängeeinheit 66 des gemäß Fig. 1 linken Zuführarms 60 verbindet, in Abhängigkeit vom gemäß Fig. 1 rechten Zuführarm 60 gesteuert.

Die Führungsgestängeeinheiten 66 enthalten jeweils Führungsgestängeprofile 78 die jeweils einen Arm bilden, an dem ein Bindegarnführungsrohr 80 angebracht ist. Das Bindegarnführungsrohr 80 ist jeweils so angeordnet, dass es zu Beginn des Bindevorgangs in den Bindemitteleinlass 32 hineinbewegt werden kann. Das Bindemittel 46 erstreckt sich dann durch das Bindegarnführungsrohr 80, wird zum Bindemitteleinlass 32 geführt, hängt dort in den Pressraum 24 hinein und wird von dem sich drehenden Ballen aufgenommen.

Bevor das Bindemittel 46 in das Bindegarnführungsrohr 80 gelangt, wird es über die Bindegarnrollen 68 zu jeweils einer ersten Bremse 42 geführt und dort in Abhängigkeit vom Bindevorgangszustand mehr oder weniger stark abgebremst, wodurch eine Bindespannung hervorgerufen wird.

Die Steuerung dieser Bremsvorgänge bzw. der ersten Bremse 42 erfolgt jeweils durch die Steuergestängeeinheit 64, die jeweils das erste Steuermittel 58 und ein zweites Steuermittel 82 enthält. Die Steuermittel 58, 80 sind fest mit der Lagerbuchse 70 des Zuführarms 60 verbunden und führen entsprechend der Schwenkbewegung der Führungsgestängeeinheit 66 bzw. des Bindegarnführungsrohres 80 eine damit fest verbundene Steuerbewegung aus.

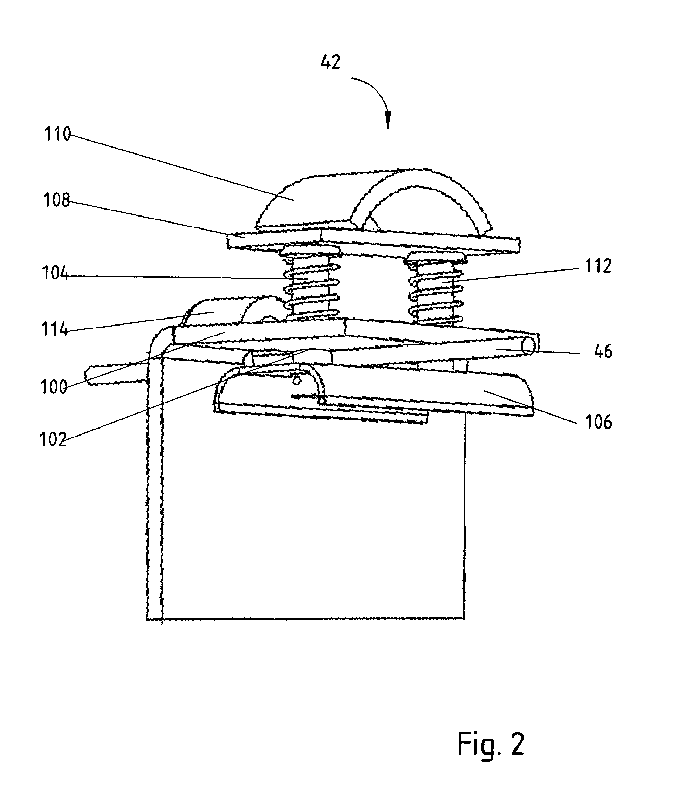

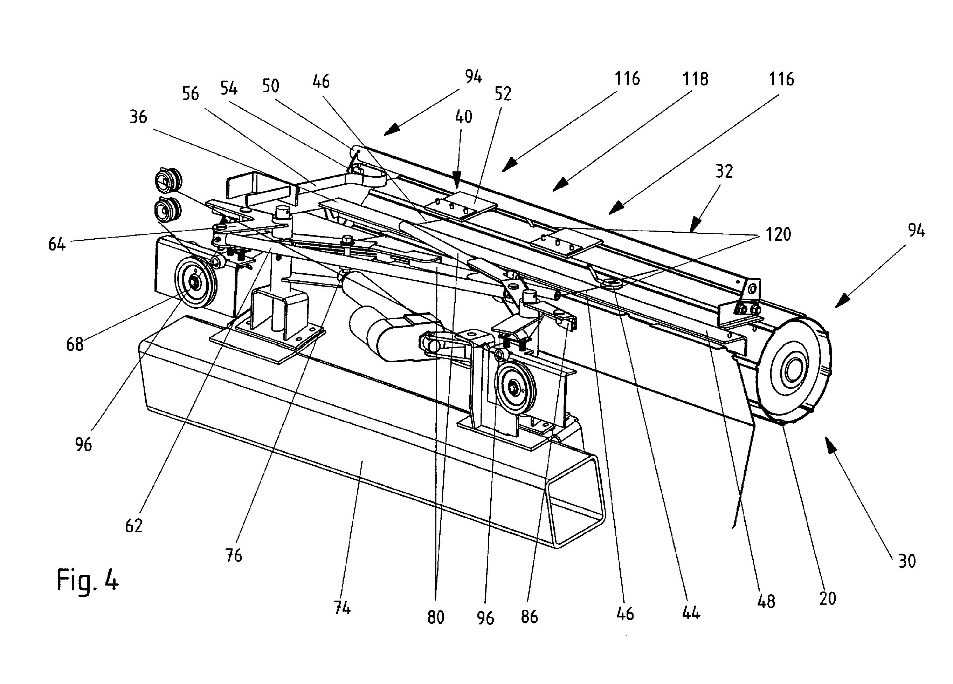

Das erste Steuermittel 58 besteht jeweils aus einem langgezogenen Winkelprofil 84, das fest mit der Lagerbuchse 70 verbunden ist und zu dieser radial verläuft. An diesem Winkelprofil 84 befindet sich ein Steuerscharnier 86, wie es in Fig. 2 und Fig. 4 zu erkennen ist, das durch ein Befestigungsmittel 88 in Form eines Haltebolzens an einem horizontal ausgerichteten Winkelprofilschenkel 90 befestigt ist und durch einen vertikal ausgerichteten Winkelprofilschenkel 92 einseitig abgestützt wird. Durch die einseitige Abstützung des Steuerscharniers 86 wird erzielt, dass das erste Steuermittel 58 nur in einer Schwenkrichtung wirkt bzw. das Steuerscharnier 86 bei einer Schwenkrichtungsumkehr an einer Bindemitteleinlassseite 94 einklappt.

Das zweite Steuermittel 82 besteht jeweils aus einem ebenfalls radial zur Lagerbuchse 70 verlaufenden Flachprofil 96, das fest mit der Lagerbuchse 70 verbunden ist und in einem Steuerschwenkwinkel 98 von ca. 30° zum ersten Steuermittel 58 angeordnet ist. Entsprechend des fest eingestellten Steuerschwenkwinkels 98 wird der Zeitpunkt zu einer zweiten Öffnung der ersten Bremse 42 festgelegt und ist durch den Steuerschwenkwinkel 98 so gewählt, dass er kurz vor oder während der Bindemitteltrennung durch die Schneidvorrichtung 40 eintritt.

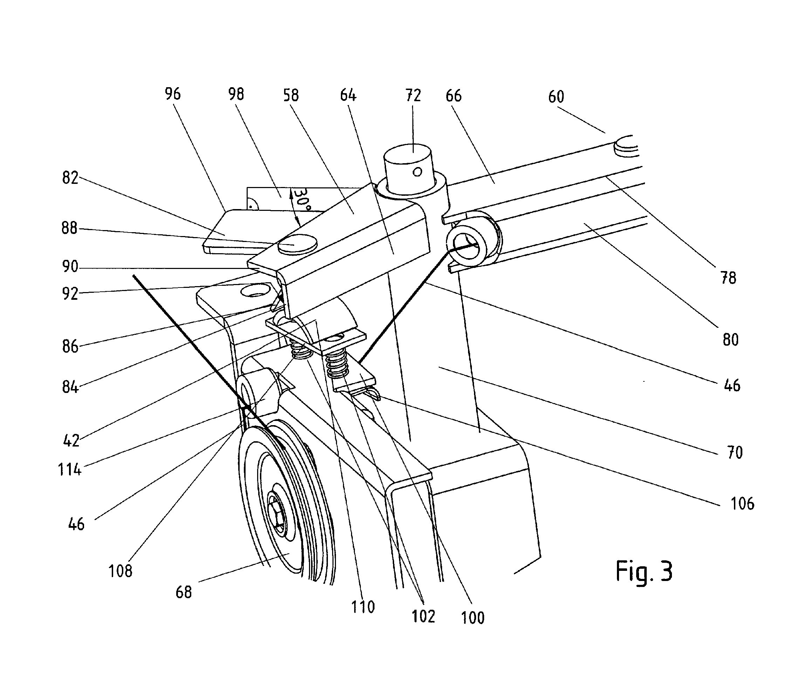

In der Detailansicht in Fig. 2 sind die einzelnen Bestandteile der ersten Bremse 42 ersichtlich. Aus Fig. 3 wird der Steuermechanismus der Steuergestängeeinheit 64 zur Steuerung der ersten Bremse 42 deutlich.

Die erste Bremse 42 enthält einen ersten Bremskörper 100, der als Trägerblech ausgebildet ist und fest mit der Trägerkonstruktion 74 verbunden ist. In dem Bremskörper 100 sind Führungsbohrungen 102 eingebracht, durch die zylindrische, zueinander parallel verlaufende Führungsbolzen 104 geführt werden. Die Führungsbolzen 104 sind an ihrem unteren Ende fest mit einem zweiten Bremskörper 106 in Form einer Bremsplatte verbunden. An dem oberen Ende der Führungsbolzen 104 ist eine Steuerplatte 108 befestigt, auf der ein Steuerbogen 110 angebracht ist. Der Bremskörper 100 befindet sich somit zwischen der Steuerplatte 108 und dem Bremskörper 106, die beide durch die Führungsbolzen 104 fest miteinander verbunden sind. Zwischen der Steuerplatte 108 und dem Bremskörper 100 sind auf den Führungsbolzen 104 Vorspannmittel 112 angebracht, die als Druckfedern ausgebildet sind. Die Vorspannmittel 112 drücken die Steuerplatte 108 und den Bremskörper 100 auseinander, wodurch der Bremskörper 106 an die Unterseite des Bremskörpers 100 gedrückt wird. Mittels einer Öse 114 wird das Bindemittel 46 zwischen die Unterseite des Bremskörpers 100 und die Oberseite des Bremskörpers 106 geführt. Durch die Federkraft der Vorspannmittel 112, die der Bremskörper 106 an die Unterseite des Bremskörpers 100 drücken, wird eine Bremskraft hervorgerufen, durch die das Bindemittel 46 abgebremst wird.

Die Schwenkbewegung der Bindegarnführungsrohre 80 wird anhand der Fig. 1 und Fig. 4 verdeutlicht. Zu Beginn des Bindevorgangs werden die Bindegarnführungsrohre 80 in die in Fig. 1 gezeigte Position gebracht, in der das Bindemittel 46 jeweils in den Randbereich eines mittleren Drittels 116 bezogen auf die seitliche Erstreckung des Bindemitteleinlasses 32 hineinhängt. Indem darauf folgenden Verlauf des Bindevorgangs schwenken die Bindegarnführungsrohre 80 in Richtung der Außenbereiche des Bindemitteleinlasses 32, bevor dann eine Schwenkrichtungsumkehr eingeleitet wird und sich die Bindegarnführungsrohre 80 wieder in Richtung Bindemitteleinlassmitte bewegen. Dort kommt es dann zu einem Überschneidungsvorgang, indem sich die Bindegarnführungsrohre 80 in die ihnen entfernte Bindemitteleinlassseite 94 bewegen, bis die Position entsprechend Fig. 4 erreicht wird. Dabei wird das Bindemittel 46 von den Bindegarnführungsrohren 80 jeweils einer zweiten Bremse 44 zugeführt, bevor die Bindemitteltrennung durch die Schneidvorrichtung 40 erfolgt. Der Schwenkzyklus ist beendet, wenn sich die Bindegarnführungsrohre 80 wieder in der Ausgangsposition entsprechend Fig. 4 befinden.

Aus dem eben beschriebenen Schwenkzyklus ergibt sich ein damit fest verbundener Steuerzyklus für die erste Bremse 42, der durch die Steuermittel 58, 82 während der Schwenkbewegung bestimmt wird. Während des Bindemitteleinlassvorgangs wird durch das erste Steuermittel 58 ein Mechanismus ausgelöst, der die erste Bremse 42 öffnet, so dass möglichst keine oder nur eine geringe Bindespannung in dem Bindemittel 46 vorliegt und es einfach von dem Ballen aufgenommen werden kann. Sobald der Bindemitteleinlassvorgang abgeschlossen ist und sich die Bindegarnführungsrohre 80 zu den Bindemitteleinlassseiten 94 bewegen, wird die erste Bremse 42 durch das erste Steuermittel 58 wieder geschlossen und die Spannung in dem Bindemittel 46 für den folgenden Bindevorgang erhöht. Damit durch die Richtungsumkehr der Bindemittelführungsrohre 80 das erste Steuermittel 58 nicht erneut die erste Bremse 42 öffnet, und damit die Bindespannung abfällt, ist das erste Steuermittel 58 jeweils so ausgeführt, dass es nur in einer Schwenkrichtung wirksam ist.

Um die Bindespannung während des Schneidvorgangs des Bindemittels 46 zu reduzieren, wird das zweite Steuermittel 82 eingesetzt, das in Abhängigkeit von der Schwenkbewegung die erste Bremse 42 erneut öffnet.

Anfangs des Bindevorgangs schwenkt die Steuergestängeeinheit 64 über den Steuerbogen 110 der ersten Bremse 42. Durch die Schwenkbewegung wird bei Überlagerung von Steuergestängeeinheit 64 und Steuerbogen 110 über die Steuermittel 58, 82 bzw. über das Steuerscharnier 86 und das Flachprofil 96 der Steuerbogen 110 heruntergedrückt. Durch Herunterdrücken des Steuerbogens 110 wird der Federkraft der Vorspannmittel 112 entgegengewirkt und die Bremskraft reduziert bzw. aufgehoben. Sind die Steuermittel 58, 82 nicht im Eingriff mit dem Steuerbogen 110, wird das Bindemittel 46 entsprechend der Federkraft der Vorspannmittel 112 konstant abgebremst.

In der letzten Phase des Bindezyklus wird das Bindemittel 46 vom gepressten Ballen getrennt. Zur Vermeidung der mit dem Zurückschnurren des Bindemittels 46 verbundenen Probleme beim Trennen des Bindemittels 46 wird zu diesem Zeitpunkt die erste Bremse 42 durch das zweite Steuermittel 82 erneut geöffnet und die Spannung aus dem Bindemittel 46 genommen. Das Entspannen des Bindemittels 46 zum Zeitpunkt der Bindemitteltrennung verhindert eine selbsttätige elastische Entspannung des Bindemittels 46, die dazu führen kann, dass das Bindemittel 46 zurückschnurrt und sich um Teile oder Elemente der Bindevorrichtung 14 windet bzw. sich in das Bindegarnführungsrohr 80 zurückzieht.

In der oben genannten letzten Phase ist jedoch eine hohe Bindespannung notwendig, damit sich das Bindemittel 46 mit den letzten Bindewindungen festzurren kann. Je höher dabei die Bindespannung ist, um so höher ist die Haltekraft des Bindemittels 46 am Ballen und damit auch die Absicherung gegen ein Abrollen des Bindemittels 46 vom Ballen, wenn der Ballen ausgeworfen wird.

Um eine hohe Bindespannung während des Trennvorgangs zu gewährleisten, wird stromabwärts der Schneidvorrichtung 40 die zweite Bremse 44 angeordnet. Die Ausführung der zweiten Bremse 44 geschieht in diesem Ausführungsbeispiel mittels einer in Fig. 4 gezeigten Feder 120, in die sich das Bindemittel 46 bei Erreichen des Trennvorgangs hineinzieht und indem eine Bindespannung zwischen der zweiten Bremse 44 und dem Ballen hervorgerufen wird. Eine derartige Ausführung der zweiten Bremse 44 ist bereits bekannt und entspricht den Vorschlägen der deutschen Patentanmeldung Nr. 101 25 569.1 vom 25.05.01 zur Ausführung einer Bindegarnbremse für den Einsatz in einer Rundballenpresse.

Zum Zeitpunkt, wenn die Schneidvorrichtung 40 das Bindemittel 46 durchtrennt, ist die Spannung im Bindemittel 46 stromaufwärts der Schneidvorrichtung 40 so gering, dass Probleme wie z. B. das Zurückschnurren des Bindemittels 46 vermieden werden können.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

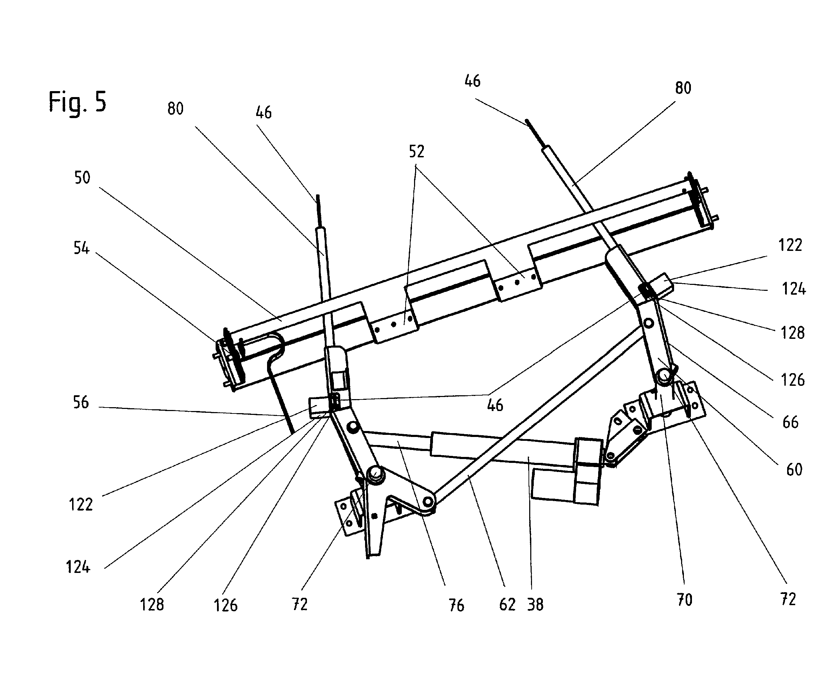

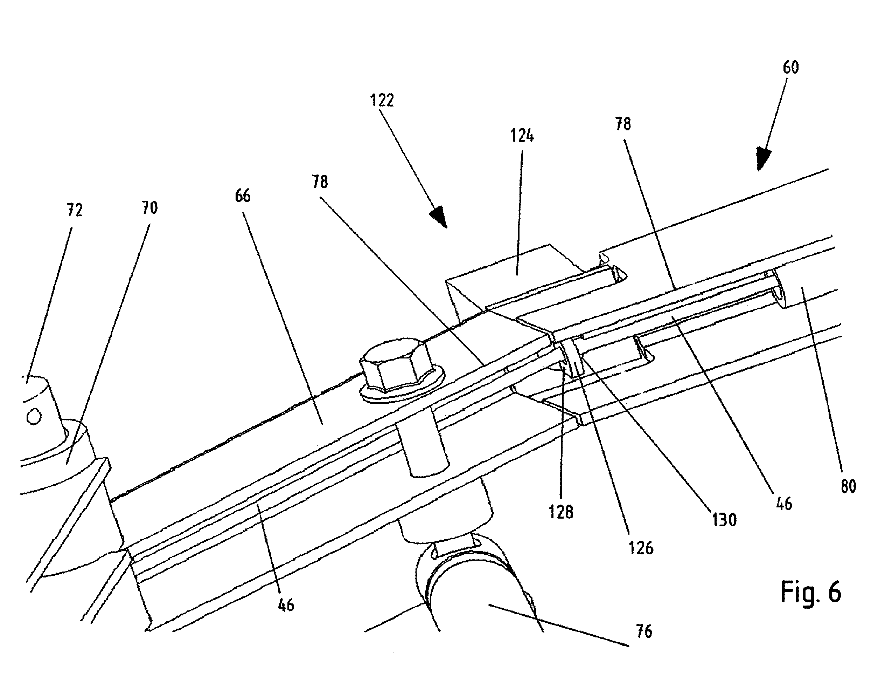

So kann beispielsweise, wie in Fig. 5 und 6 verdeutlicht, die Bindespannung durch Einsatz einer elektromagnetisch gesteuerten Bremse 122 an Stelle der oben beschriebenen ersten Bremse 42 hervorgerufen werden. Dazu wird ein Elektromagnet 124 an der Führungsgestängeeinheit 54 angebracht. Der Elektromagnet 124 bewegt eine Bremsöse 126, die durch eine Bohrung 128 am Führungsgestängeprofil 78 hindurchragt. Das Bindemittel 46 wird durch die Bremsöse 126 geführt und bei Betätigen des Elektromagneten 124 von der Bremsöse 126 in die Bohrung 128 gezogen. Dadurch entstehen Reibkräfte zwischen dem Bindemittel 46 und dem Rand 130 der Bohrung 128 bzw. der Bremsöse 126, wodurch eine Bindespannung hervorgerufen wird. Der Elektromagnet 124 ist mit einer nicht gezeigten Strom- bzw. Spannungsquelle verbunden und wird über eine nicht gezeigte elektronische Steuerung entsprechend der Schwenkbewegung des Zuführarms 60 angesteuert. Die Ansteuerung des Elektromagneten 124 durch die elektronische Steuerung erfolgt automatisch oder manuell.

## Patentansprüche

1. Bindevorrichtung (14) mit einer Bindemittelführung (36), wenigstens einer Schneidvorrichtung (40) und wenigstens einer ersten Bremse (42) für Bindemittel (46), vorzugsweise Bindegarn, wobei die erste Bremse (42) steuerbar ist und eine variable Bremskraft erzeugt, **gekennzeichnet durch** wenigstens einen mit der Bindemittelführung (36) gekoppelten Zuführarm (60), der eine Steuergestängeeinheit (64) enthält, die in Abhängigkeit von Bindezykluszuständen die erste Bremse (42) ansteuert und wenigstens zwei Bremskraftwechsel innerhalb eines Bindezyklus auslöst.

2. Bindevorrichtung (14) nach Anspruch 1, **dadurch gekennzeichnet, dass** die erste Bremse (42) zwischen einem Bindemittelvorrat und einem Bindegarnführungsrohr (80) positioniert ist.

3. Bindevorrichtung (14) nach Anspruch 1 oder 2, **dadurch gekennzeichnet, dass** eine zweite Bremse (44) für Bindemittel (46) stromabwärts der Schneidvorrichtung (40) positioniert ist.

4. Bindevorrichtung (14) nach einem der vorhergehenden Ansprüche, **dadurch gekennzeichnet, dass** die Steuergestängeeinheit (64) mechanisch und/oder elektrisch und/oder magnetisch und/oder hydraulisch und/oder pneumatisch mit der Bindemittelführung (36) gekoppelt ist.

5. Bindevorrichtung (14) nach einem der vorhergehenden Ansprüche, **dadurch gekennzeichnet, dass** die erste Bremse (42) zwei Bremskörper (100, 106) enthält, die in einem zueinander steuerbaren Abstand gegenüberliegende Bremskörperflächen aufweisen zwischen denen das Bindemittel (46) hindurchgeführt wird, wenigstens ein Bremskörper (106) steuerbar ist und als eine Bremsplatte ausgebildet ist, und die Bremskörper (100, 106) eine dem Bindemittelstrom entgegengerichtete Reibkraft auf das Bindemittel (46) ausüben.

6. Bindevorrichtung (14) nach Anspruch 5, **dadurch gekennzeichnet, dass** der andere Bremskörper (100) als ein Bremskörper ausgebildet ist, welches fest mit einer Trägerkonstruktion (74) verbunden ist, wobei der Bremskörper (100) mit Führungsbohrungen (102) versehen ist, durch die parallel verlaufende Führungsbolzen (104) steuerbar geführt werden, welche an ihrem unteren Ende mit dem Bremskörper (106) und an ihrem oberen Ende mit einer Steuerplatte (108) fest verbunden sind.

7. Bindevorrichtung (14) nach Anspruch 6, **dadurch gekennzeichnet, dass** zur Erzeugung einer Bremskraft Vorspannmittel (112) vorgesehen sind, die einen vorgebbaren Anpressdruck zwischen den Bremskörpern (100, 106) erzeugen, wobei die Vorspannmittel vorzugsweise zwischen der Steuerplatte (108) und dem Bremskörper (100) angeordnet sind.

8. Bindevorrichtung (14) nach Anspruch 6 und/oder 7, **dadurch gekennzeichnet, dass** die Steuergestängeeinheit (64) mit ihr verbundene und von einer Schwenkbewegung der Bindemittelführung (36) abhängige Steuermittel (58, 82) enthält, die eine Steuerkraft auf einen auf der Steuerplatte (108) befestigten und mit einer vorgebbaren Bogenkontur versehenen Steuerbogen (110) ausüben, und damit eine Zustandsänderung der ersten Bremse (42) hervorrufen, wodurch eine Abstandsänderung zwischen dem Bremskörper (106) und dem Bremskörper (100) und damit eine Bremskraftänderung erfolgt.

9. Bindevorrichtung (14) nach Anspruch 8, **dadurch gekennzeichnet, dass** die Steuermittel (58, 82) ein Steuerscharnier (86), das an einem mit dem Zuführarm (60) schwenkbaren Winkelprofil (84) befestigt ist und ein mit dem Zuführarm (60) schwenkbares Flachprofil (96) enthalten, wobei das Steuerscharnier (86) und das Flachprofil (96) in Abhängigkeit von ihrer Schwenkposition über den Steuerbogen (110) fahren und eine Steuerkraft auf diesen Steuerbogen (110) ausüben.

10. Bindevorrichtung (14) nach Anspruch 9, **dadurch gekennzeichnet, dass** das Flachprofil (96) in einem Steuerschwenkwinkel (98) von vorzugsweise 30° zum Winkelprofil (84) angeordnet ist und dass das Steuerscharnier (86) klappbar an dem Winkelprofil (84) durch Befestigungsmittel (88) angebracht ist, in einer Schwenkrichtung feststeht und in der entgegengesetzten Schwenkrichtung einklappt, wodurch die auf den Steuerbogen (110) ausgeübte Steuerkraft nur in eine Schwenkrichtung erfolgt.

11. Bindevorrichtung (14) nach Anspruch 1 bis 4, **dadurch gekennzeichnet, dass** die erste Bremse mechanische und/oder elektronische und/oder magnetische und/oder pneumatische und/oder hydraulische Bremsmittel (124), vorzugsweise ein als Elektromagneten (124) ausgebildetes Bremsmittel enthält, die Bremskörper (126, 128, 130) betätigen, die eine Bremskraft auf das Bindemittel ausüben.

12. Bindevorrichtung (14) nach einem der vorhergehenden Ansprüche, **dadurch gekennzeichnet, dass** die Bindemittelführung (36) mehr als einen Zuführarm (60) enthält, wodurch ein oder mehrere Bindemittel (46), zugeführt werden, wobei die Bindemittel (46) als Bindegarn, Bindedraht, oder andere bandförmige Bindemittel ausgebildet sind.

13. Verfahren zur Steuerung einer Bindevorrichtung (14) mit einer Bindemittelführung (36), wenigstens einer Schneidvorrichtung (40) und wenigstens einer ersten Bremse (42) für Bindemittel (46), vorzugsweise Bindegarn, wobei die erste Bremse (42) steuerbar ist und eine variable Bremskraft erzeugt, wobei ein erster Bremskraftwechsel nach Beginn eines Bindezyklus erfolgt und dabei die Bremskraft erhöht wird, **dadurch gekennzeichnet, dass** wenigstens ein weiterer Bremskraftwechsel vor einer Bindematerialtrennung erfolgt und dabei die Bremskraft reduziert bzw. minimiert wird.

14. Verfahren nach Anspruch 13, **dadurch gekennzeichnet, dass** weitere Bremskraftwechsel vor dem Bremskraftwechsel vor der Bindematerialtrennung erfolgen und dabei die Bremskraft erhöht oder reduziert wird.

15. Verfahren nach Anspruch 13 und/oder 14, **dadurch gekennzeichnet, dass** zum oder nach dem Zeitpunkt der Bindemitteltrennung durch eine zweite Bremse (44) für Bindemittel (46) die Bindemittelspannung stromaufwärts der Schneidvorrichtung (40) aufgehoben wird.

16. Verfahren nach Anspruch 13 bis 15, **dadurch gekennzeichnet, dass** die Bremskraftwechsel in Abhängigkeit von der Position des Zuführarms (60) eingeleitet werden.
